# FASCICULE DE BREVET EUROPEEN

(11) **EP 3 728 165 B1**
(45) Date de publication et mention de la délivrance du brevet: **18.06.2025**
(21) Numéro de dépôt: 18849398.5
(22) Date de dépôt: 21.12.2018
(51) Int. Cl.: C05F 11/10, C05G 3/00

(54) **STIMULATION DE LA NITRIFICATION D'UN SOL AVEC DES COMPOSITIONS COMPRENANT UN EXTRAIT DE PLANTE**
STIMULIERUNG DER NITRIFIKATION EINES BODENS MIT ZUSAMMENSETZUNGEN, DIE EINEN PFLANZENEXTRAKT ENTHALTEN
STIMULATION OF THE NITRIFICATION OF A SOIL WITH COMPOSITIONS COMPRISING A PLANT EXTRACT

(30) Priorité: 22.12.2017 FR 1763157
(43) Date de publication de la demande: 28.10.2020
(73) Titulaire: Agro Innovation International, 35400 Saint-Malo (FR)
(72) Inventeur: YVIN, Jean-Claude, 35400 SAINT-MALO (FR); ARKOUN, Mustapha, 35430 Saint-Jouan des Guérets (FR)
(74) Mandataire: Cabinet Beau de Loménie
(86) Numéro de dépôt international: PCT/FR2018/053499
(87) Numéro de publication internationale: WO 2019/122775

(56) Documents cités:
- EP-A1- 1 967 198
- WO-A1-89/09200
- WO-A2-2007/006391
- US-A1- 2004 234 674
- L. JAFARI ET AL: "ALLELOPATHIC EFFECTS OF CHENOPODIUM ALBUM L. EXTRACTS ON NITRIFICATION", JOURNAL OF PLANT NUTRITION, vol. 25, no. 3, 25 March 2002 (2002-03-25), US, pages 671 - 678, XP055474729, ISSN: 0190-4167, DOI: 10.1081/PLN-120003389
- MCCARTY G W ET AL: "Effects of phenolic acids on ammonia oxidation by terrestrial autotrophic nitrifying microorganisms", FEMS MICROBIOLOGY LETTERS, WILEY-BLACKWELL PUBLISHING LTD, GB, vol. 85, no. 4, 1 July 1991 (1991-07-01), pages 345 - 349, XP023989878, ISSN: 0378-1097, [retrieved on 19910701], DOI: 10.1111/J.1574-6968.1991.TB04761.X

## Description

### Domaine technique

L'invention trouve son application dans le domaine agro-écologique et agricole et concerne en particulier la stimulation de la nitrification d'un sol avec des compositions comprenant un extrait de plante.

### Arrière-plan technologique

La fertilisation azotée joue un rôle essentiel pour la croissance et le rendement des cultures. L'azote est le constituant principal des acides aminés et des protéines, c'est donc un élément très important pour la croissance des plantes et leur qualité. Comme il est soumis à un cycle naturel dans l'air, le sol et l'eau, l'azote subit différentes transformations chimiques et biologiques, c'est le cycle de l'azote.

Le cycle global de l'azote décrit les transformations de l'azote gazeux, minéral et des composés organiques riches en azote présents sur terre. C'est un ensemble de processus microbiens contrôlé par les microorganismes du sol. Cela inclut l'assimilation, l'ammonification, la nitrification, la dénitrification, la fixation biologique de l'azote et l'oxydation anaérobique de l'ammoniac.

Parmi l'ensemble de ces processus, la nitrification est l'étape biologique la plus importante du cycle de l'azote dans le sol, et elle est considérée comme une étape limitante qui peut être à l'origine de la faible efficience d'utilisation de l'azote, qui peut contribuer à la pollution des eaux souterraines et à l'émission de gaz à effet de serre (N₂O). Le taux de nitrification peut varier selon la nature du sol. Parmi les facteurs régulant le processus de nitrification il y a le pH du sol, la température, l'humidité, l'engrais azoté apporté au sol, les microorganismes et la nature physique du sol.

La nitrification correspond à l'oxydation de l'ammonium (NH₄⁺) en nitrate (NO₃⁻). Cette nitrification passe par plusieurs étapes. Tout d'abord les bactéries et archées du groupe Nitrosomas, AOB (Ammonia-Oxidising Bacteria) et AOA (Ammonia-Oxidising archaea), permettent d'oxyder l'ammonium en hydroxylamine (NH₂OH). Ce dernier est pris en charge par les nitrite-Oxidising Bacteria (NOB) pour le transformer en nitrite (NO₂⁻). Enfin ce sont les Nitrobacter qui permettent d'oxyder les nitrites en nitrate (NO₃⁻). Afin de transformer l'ammonium en nitrites, quatre protons sont relâchés ainsi que deux molécules d'eau, ce phénomène provoque une acidification du sol, notamment autour des racines. L'activité des bactéries AOB et AOA dépend fortement de l'environnement, en particulier l'humidité, le pH, la température et la disponibilité de l'ammonium ont une grande influence.

L'azote existe sous différentes formes : à l'état libre sous forme de N₂, où il constitue 78% de l'air et à l'état combiné, sous forme minérale ou organique.

### L'azote organique

Les réserves du sol en azote se trouvent à l'état organique sous forme d'humus ou de MOS (Matière Organique des Sols), provenant des résidus de culture ou des déjections animales. Elle est constituée de divers composés azotés (protéines, acides aminés etc.), et dont la minéralisation est très variable et difficilement prévisible.

### L'azote minéral

Il provient de la décomposition de la matière organique par la faune et la flore du sol (processus de minéralisation), ou directement des apports d'engrais inorganiques. L'azote minéral se compose de trois formes principales : l'urée, l'ammonium et les nitrates.

L'urée est une source d'azote largement utilisée dans le monde. Bien qu'elle puisse être directement absorbée par les plantes, elle est le plus souvent hydrolysée en ammonium (NH₄⁺), forme plus facilement assimilable par les plantes. Cette transformation s'accompagne d'une augmentation du pH du sol et de pertes importantes par volatilisation (NH₃ : ammoniac gazeux), à l'origine des pollutions atmosphérique. Une nutrition uréique stricte peut conduire à une croissance diminuée et parfois même à l'apparition de carence azotée.

L'ammonium est l'une des principales sources d'azote pour les plantes. A forte concentration, cet élément peut être toxique pour les plantes lorsqu'il s'accumule dans les tissus. L'ammonium peut être apporté sous forme d'engrais. Grâce à sa charge positive, le NH₄⁺ se fixe sur le complexe argilo-humique du sol ce qui limite sa disponibilité instantanée pour la plante. L'ammonium étant fixé par le sol, il ne peut se déplacer dans celui-ci. L'absorption par la plante ne pourra donc se faire que dans un périmètre proche de la zone racinaire. Les ions fixés entre les feuillets d'argiles sont pour la plupart oxydés par les bactéries nitrifiantes (Nitrobacter, Nitrosomas...) et transformés en nitrates, il s'agit du processus de nitrification, qui s'accompagne d'une diminution du pH du sol.

Le nitrate est considéré comme la source d'azote majoritaire et préférable par les plantes. En outre, la mobilité du nitrate dans le sol facilite son absorption par les plantes. Par conséquent, la plupart des plantes présentent un caractère nitrophile. Le nitrate, porteur d'une charge négative, n'est pas retenu par les particules du sol et par conséquent, il peut être facilement lixivié en raison de sa solubilité. Il peut également être réduit en oxyde d'azote gazeux par le processus de dénitrification. Par ailleurs, du fait de sa solubilité, le nitrate est facilement véhiculé par l'eau du sol jusqu'aux racines, c'est le phénomène de flux de masse.

L'intérêt nutritionnel de chaque forme d'azote est différent d'une forme à une autre. Par ordre de préférence, les plantes absorbent principalement le nitrate (NO₃⁻), puis l'ammonium (NH₄⁺), et dans une moindre mesure l'urée.

Les plantes cultivées sur des sources mixtes d'azote contenant du nitrate et de l'urée ou du nitrate et de l'ammonium, ou sur des sources contenant les trois formes d'azote (urée, ammonium et nitrate), retrouvent une meilleure croissance par rapport aux plantes cultivées sur de l'urée ou de l'ammonium seul.

Contrôler le processus de nitrification et le passage de la forme ammoniacale à la forme nitrique, pour avoir les deux formes (ammonium et nitrate, ou urée et nitrate) ou les trois formes (urée, ammonium et nitrate) est crucial pour améliorer l'efficience d'utilisation de l'azote par les plantes, contribuant à augmenter les rendements tout en préservant l'environnement.

La vitesse de nitrification dans le sol à une influence importante dans la mise à disposition pour les plantes des différentes formes d'azote minéral, principalement le nitrate. La vitesse de nitrification dépend de plusieurs paramètres comme l'humidité, le pH, la température et la disponibilité de l'ammonium. Un pH de sol acide, une faible humidité et des températures froides diminuent la vitesse de nitrification. Un pH de sol alcalin, une forte humidité et des températures chaudes augmente la vitesse de nitrification.

Plusieurs types de fertilisants azotés sont commercialisés, par exemple :
- Le sulfate d'ammonium qui, cristallisé ou granulé, donne un engrais appelé sulfate d'ammoniaque souvent dosé jusqu'à 21% d'azote.
- L'urée obtenue par combinaison de l'ammoniac et du gaz carbonique formé lors de la synthèse de l'ammoniac. L'urée est une molécule largement présente dans le milieu naturel. Elle constitue une source d'azote pour la croissance de divers organismes dont les bactéries, les champignons et les plantes. En raison de sa teneur élevée en azote (46%) et son faible coût de production, l'urée représente plus de 50% du total des engrais azotés utilisés en agriculture.
- Le nitrate d'ammonium obtenu par réaction entre l'ammoniac et l'acide nitrique. Cette forme dose 27%; 33.5% ou 35% d'azote total. Elle est composée de 50% d'azote sous forme d'ammonium et 50% sous forme de nitrate et c'est les produits le plus utilisés en France et en Europe. Le nitrate et l'ammonium sont les principales sources d'azote pour la croissance les plantes.
- La solution azotée dose 30% d'azote en massique et 39% en volumique. Ce type d'engrais contient les trois formes d'azote : 50% d'urée, 25% d'ammoniac et 25% de nitrate.

Il existe donc un réel besoin de mettre au point des compositions permettant à la plante d'utiliser de manière plus efficace l'azote présent dans les compositions fertilisantes et de contrôler le processus de nitrification, notamment pour accroître la vitesse de nitrification et favoriser l'apparition rapide des nitrates dans le sol. Tout ceci dans le but de permettre une meilleure valorisation de l'azote par la plante, même dans les conditions limitantes de la nitrification.

C'est dans ce contexte que le demandeur a mis en évidence, et ceci constitue le fondement de la présente invention, que des compositions comprenant un extrait de feuille de *Cynara* peuvent être utilisées pour stimuler la nitrification d'un sol, en particulier d'un sol ayant un pH acide. Ces compositions permettent notamment à la plante d'utiliser de manière plus efficace l'azote présent dans le sol dans le but d'obtenir une meilleure productivité des cultures.

### Résumé de l'invention

Ainsi, la présente invention, qui trouve application dans le domaine agro-écologique et agricole, vise à proposer de nouvelles compositions pour stimuler la nitrification d'un sol.

Selon un premier aspect, l'invention concerne l'utilisation d'une composition comprenant un extrait de feuilles de *Cynara* pour stimuler la nitrification d'un sol.

Selon un deuxième aspect, l'invention concerne un procédé pour stimuler la nitrification d'un sol, caractérisé en ce qu'il comprend l'apport audit sol d'une composition amendante comprenant un extrait de feuilles de *Cynara.*

### Description détaillée de l'invention

Le terme « composition amendante » désigne un composé ou un ensemble de composés pouvant être utilisé comme amendement d'un sol.

Un « amendement » ou un « amendement d'un sol » permet d'améliorer la qualité agricole d'un sol. Les amendements sont utilisés en agriculture pour améliorer la productivité des sols, en particulier les sols acides.

Le terme « amendement basique calcique » désigne un amendement riche en carbonate de calcium, par exemple d'origine marine ou terrestre. Dans le cadre de l'invention, l'amendement basique calcique peut être un amendement calcaire marin à base de débris de coquilles d'organismes marins, par exemple l'amendement Calcimer^{®} (Timac Agro, France).

Le terme « extrait de levures » désigne le produit résultant de l'extraction du contenu des cellules de levure. Les méthodes d'extraction sont largement décrites dans la littérature et faciles à mettre en œuvre par l'homme de l'art. L'extrait de levures peut être un hydrolysat de levures. Dans le cadre de l'invention, l'extrait de levure peut être un hydrolysat de levures de référence CAS No 8013-01-2.

Le terme « hydrolysat » désigne un produit résultant d'une décomposition chimique par l'action directe ou indirecte de l'eau.

Le terme « extrait de légumineuse » désigne le produit résultant de l'extraction du contenu de cellules végétales de la famille des légumineuses. Les méthodes d'extraction sont largement décrites dans la littérature et faciles à mettre en œuvre par l'homme de l'art. Dans le cadre de l'invention, l'extrait de légumineuse de la famille des fabacées peut être un extrait de soja, par exemple un perméat de soja.

Le terme « perméat » désigne le liquide qui a traversé la membrane d'un processus de séparation chimique (osmose inverse, ultrafiltration). Ainsi, un perméat de soja désigne le liquide qui a traversé la membrane d'un processus de séparation chimique à partir d'un extrait de soja. Le perméat peut être utilisé sous forme liquide ou sous forme solide, par exemple sous forme de poudre. Un perméat de soja peut être obtenu par ultrafiltration d'eau de lavage de graines de soja comme décrit dans l'ouvrage Plant Science Review 2011 publié par David Henning, par exemple le perméat de soja commercialisé par Triballat Noyal (Noyal-sur-Vilaine, France).

Le terme « substance(s) fertilisante(s) » ou « produit(s) fertilisant(s) » désigne une substance, ou un mélange de substances, d'origine naturelle ou d'origine synthétique, utilisée(s) en agriculture pour favoriser la croissance des plantes en leurs apportant des éléments nutritifs.

Le terme « nitrification » désigne le processus biologique d'oxydation de l'ammonium (NH4⁺) en nitrate (NO₃⁻).

Le terme « stimulation de la nitrification d'un sol » ou « augmentation de la nitrification d'un sol » désigne une augmentation de la teneur en nitrate dans un sol.

Par l'expression « plante » on entend désigner dans la présente demande la plante considérée dans son ensemble, incluant son appareil racinaire, son appareil végétatif, les graines, semences et fruits.

La présente invention découle des avantages surprenants mis en évidence par les inventeurs de l'effet d'une composition comprenant un extrait de feuille de *Cynara* sur la nitrification des sols et le rendement des cultures.

L'invention concerne en effet l'utilisation d'une composition comprenant un extrait de feuilles de *Cynara* pour stimuler la nitrification d'un sol. Ladite composition amendante peut également comprendre un ou plusieurs composé(s) choisi(s) parmi un amendement basique calcique, un extrait de levures, et un extrait de légumineuse de la famille des fabacées.

L'invention concerne également un procédé pour stimuler la nitrification d'un sol, caractérisé en ce qu'il comprend l'apport audit sol d'une composition amendante comprenant un extrait de feuilles de *Cynara.* Ladite composition amendante peut également comprendre un ou plusieurs composé(s) choisi(s) parmi un amendement basique calcique, un extrait de levures, et un extrait de légumineuse de la famille des fabacées.

*Cynara* est un genre de plantes vivaces à port de chardon de la famille des *Asteraceae.* Ce genre comporte plusieurs espèces, notamment :
- le complexe *Cynara cardunculus comprenant:*
   ∘ *C. cardunculus var. scolymus* (L.) Fiori, artichaut cultivé
   ∘ C. *cardunculus var. altilis* DC (= C. cardunculus subsp. cardunculus), chardon cultivé
   ∘ *C. cardunculus var. sylvestris* (Lamk.) Fiori, chardon sauvage
- *Cynara syriaca Boiss.*
- *Cynara cornigera Lindely* (syn. sibthornpiana Boiss. et Heldr.)
- *Cynara algarbiensis Cosson*
- *Cynara baetica* (Spreng.) Pau (syn. alba Boiss.)
- *Cynara humilis L.*
- *Cynara cyrenaica* Maire & Weiller

Dans un mode de réalisation préféré de la présente invention, *Cynara* est *Cynara scolymus,* plus communément connu sous le nom d'artichaut.

Pour obtenir un extrait de feuilles de *Cynara,* la plante entière peut être utilisée, mais il est préférable d'utiliser les feuilles. La préparation d'un extrait de feuilles de *Cynara* ne présente aucune difficulté particulière, de nombreux procédés d'extraction sont décrits dans l'art antérieur. Le procédé d'extraction n'est pas limité à un procédé particulier, et les procédés classiquement utilisés sont applicables pour la préparation d'un extrait de feuilles de *Cynara,* par exemple l'extraction aqueuse, comme l'extraction aqueuse obtenue en mode Batch par agitation.

Par exemple, des extraits de feuille de *Cynara* peuvent être obtenus par un procédé comportant les étapes suivantes : lavage, broyage, extraction (séparation solide-liquide) et éventuellement fractionnement et concentration.

Dans un mode de réalisation particulier, l'extrait de feuilles de *Cynara* est un soluté de feuilles de *Cynara.* Par exemple, l'extrait de feuilles de *Cynara* peut être obtenu par extraction aqueuse en mélangeant des feuilles des *Cynara scolymus coupées* et/ou broyées à une taille appropriée, éventuellement sous forme de poudre (ex. de tamis 60) avec de l'eau à une température et une durée appropriées. Un exemple de procédé de préparation consiste à mélanger une poudre de feuilles de *Cynara* avec de l'eau à 40°C pendant 3 heures, le mélange est ensuite filtré pour en récupérer la fraction liquide. La fraction liquide peut être utilisée en tant que telle comme extrait de feuilles de *Cynara* ou peut subir un ou plusieurs traitements ultérieurs, par exemple une centrifugation et/ou une filtration.

L'extrait de feuilles de *Cynara* obtenu peut être plus ou moins concentré selon l'utilisation envisagée. Une déshydratation totale de cet extrait permettant une présentation sous forme pulvérulente hydrosoluble peut être réalisée, par exemple, au moyen d'un sécheur à tambour, par atomisation ou par lyophilisation.

L'extrait de feuilles de *Cynara* utilisé dans le cadre de la présente invention contient des polyphénols dérivés de l'acide chlorogénique. L'acide chlorogénique est un acide-phénol, ester de l'acide caféique et de l'acide (L)-quinique de formule :

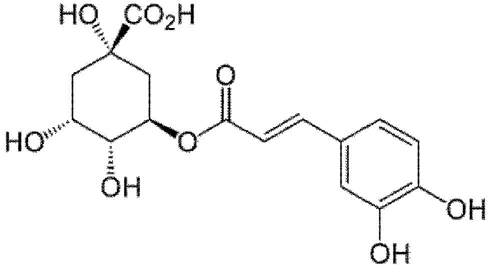

Les polyphénols dérivés de l'acide chlorogénique contenus dans l'extrait de feuilles de Cynara sont notamment la cynarine, l'acide férulylquinique (AFQ) l'acide p-coumarylquinique (APQ) l'acide sinapylquinique, l'acide diméthoxycinnamylquinique.

Avantageusement, l'extrait de feuilles de *Cynara* contient une quantité de polyphénol dérivé de l'acide chlorogénique supérieure à 10 mg de polyphénol dérivé de l'acide chlorogénique pour 100g d'extrait sec, par exemple une quantité supérieure à 15 mg pour 100g d'extrait sec, supérieure à 20 mg, supérieure à 25 mg, supérieure à 30 mg, supérieure à 35 mg, supérieure à 40 mg, par exemple entre 10 mg et 100 mg ou entre 10 mg et 50 mg de polyphénol dérivé de l'acide chlorogénique pour 100g d'extrait sec. L'extrait de feuilles de *Cynara* peut aussi contenir une quantité de polyphénol dérivé de l'acide chlorogénique supérieure à 100 mg de polyphénol dérivé de l'acide chlorogénique pour 100g d'extrait sec, par exemple une quantité supérieure à 150 mg pour 100g d'extrait sec, supérieure à 250 mg, supérieure à 500 mg, supérieure à 750 mg, supérieure à 1000 mg, supérieure à 1500 mg, et même supérieure à 2000 mg de polyphénol dérivé de l'acide chlorogénique pour 100g d'extrait sec.

L'extrait de feuilles de *Cynara* utilisé dans le cadre de la présente invention contient de la cynarine. La cynarine ou acide dicaféylquinique est un composé biochimique (polyphénol) de formule :

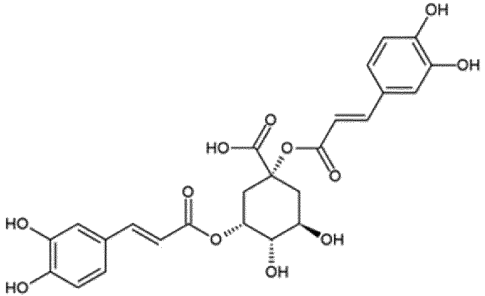

Avantageusement, l'extrait de feuilles de *Cynara* contient une quantité de cynarine supérieure à 2 mg pour 100 g d'extrait sec, par exemple une quantité de cynarine supérieure à 5 mg pour 100g d'extrait sec, par exemple une quantité supérieure à 10 mg pour 100g d'extrait sec, supérieure à 15 mg, supérieure à 20 mg, supérieure à 25 mg, supérieure à 30 mg, supérieure à 35 mg, supérieure à 40 mg, par exemple entre 2 mg et 100 mg, entre 2 mg et 50 mg ou entre 2 mg et 6 mg de cynarine pour 100g d'extrait sec.

Dans un mode de réalisation particulier, l'extrait de feuilles de *Cynara* contient au moins 15 mg de polyphénols dérivés de l'acide chlorogénique, dont au moins 3 mg de cynarine, pour 100 g d'extrait sec. Dans un autre mode de réalisation particulier l'extrait de feuilles de *Cynara* contient au moins 2000 mg de polyphénols dérivés de l'acide chlorogénique, dont au moins 40 mg de cynarine, pour 100 g d'extrait sec.

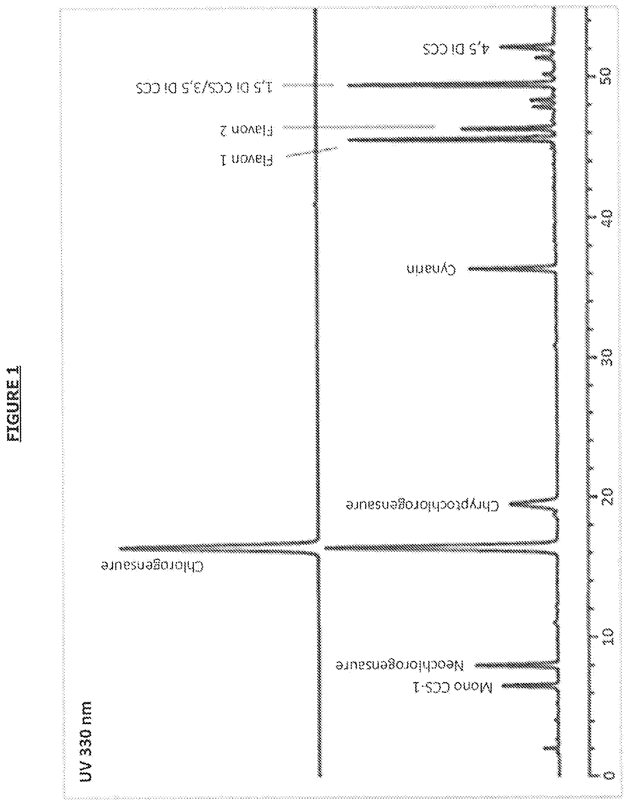

Dans un mode de réalisation particulier, l'extrait de feuilles de *Cynara* est un extrait de *Cynara scolymus qui* a le profil HPLC présenté en Figure 1 (profil du bas).

Dans un mode de réalisation particulier, la composition amendante comprend en outre un extrait de levures. La préparation d'un extrait de levure ne présente aucune difficulté particulière. Des procédés de préparation d'extraits de levures sont largement décrits dans l'art antérieur et des extraits de levures sont disponibles commercialement. Le procédé d'extraction n'est pas limité à un procédé particulier, et les procédés classiquement utilisés sont applicables pour la préparation de l'extrait de levures, par exemple l'extraction aqueuse qui permet d'obtenir un hydrolysat de levures.

Avantageusement, l'extrait de levures est un hydrolysat de levures. Par exemple, un hydrolysat de levures peut être obtenu par extraction aqueuse en mélangeant des levures avec de l'eau à une température et une durée appropriées.

Dans un mode de réalisation préféré, l'hydrolysat de levures est l'hydrolysat de référence CAS No 8013-01-2. Cet hydrolysat, qui est vendu sous le nom commercial « Celmanax^{®} », est connu pour son effet stimulant du système immunitaire des animaux. Il comprend des oligo-polysaccharides, notamment le D-Galactosamine, le D-Glucosamine, des manno-oligosaccharides et des bêta-glucanes.

L'extrait de levure obtenu peut être plus ou moins concentré selon l'utilisation envisagée. Une déshydratation totale de cet extrait permettant une présentation sous forme pulvérulente hydrosoluble peut être réalisée, par exemple, au moyen d'un sécheur à tambour ou par atomisation.

Avantageusement, l'extrait de levure selon l'invention comprend au moins 20g de manno-oligosaccharides pour 100g d'extrait sec de levures et au moins 40g de bêta-glucanes pour 100g d'extrait sec de levures.

Dans un mode de réalisation particulier, la composition comprend en outre un extrait de légumineuse de la famille des fabacées, de préférence un extrait de soja, de préférence un perméat de soja. Des procédés de préparation d'extraits de légumineuses sont largement décrits dans l'art antérieur. Le procédé d'extraction n'est pas limité à un procédé particulier, et les procédés classiquement utilisés sont applicables pour la préparation de l'extrait de légumineuse, par exemple l'extraction aqueuse en milieu acide neutre ou alcalin.

L'extrait de légumineuse obtenu peut être plus ou moins concentré selon l'utilisation envisagée. Une déshydratation totale de cet extrait permettant une présentation sous forme pulvérulente hydrosoluble peut être réalisée, par exemple, au moyen d'un sécheur à tambour ou par atomisation.

La composition peut également comprendre une ou plusieurs substance(s) fertilisante(s) classiquement utilisée(s) en agriculture. Par exemple, la composition peut comprendre en outre une ou plusieurs substance(s) fertilisante(s) choisie(s) parmi l'urée, le sulfate d'ammonium, le nitrate d'ammonium, le phosphate, le chlorure de potassium, du sulfate d'ammonium, le nitrate de magnésium, le nitrate de manganèse, le nitrate de zinc, le nitrate de cuivre, l'acide phosphorique, le nitrate de potassium et l'acide borique, de préférence une ou plusieurs substance(s) fertilisante(s) choisie(s) parmi l'urée, le phosphate et le chlorure de potassium.

Avantageusement, l'application de la composition amendante aux plantes sera réalisée par voie foliaire ou par voie racinaire. Avantageusement, la composition amendante est apportée au sol sous forme liquide ou sous forme solide.

Dans un mode de réalisation préféré, la composition amendante est apportée au sol sous forme solide et ladite composition comprend un amendement basique calcique. Dans ce mode de réalisation, la composition amendante comprend avantageusement au moins 0,1% en poids d'un extrait de feuilles de *Cynara* par rapport au poids total de la composition, par exemple au moins 1%, 2%, 3%, 4%, 5%, par exemple entre 0,1% et 5% en poids d'un extrait de feuilles de *Cynara* par rapport au poids total de la composition. Dans ce mode de réalisation, la composition amendante peut également comprendre :
- au moins 0,1% en poids d'un extrait de levure par rapport au poids total de la composition, par exemple au moins 1%, 2%, 3%, 4 %, 5 % et 10 % de préférence entre 0,1% et 5% d'un extrait de levure par rapport au poids total de la composition, et/ou
- au moins 0,1% en poids d'un extrait de légumineuse par rapport au poids total de la composition, par exemple au moins 1%, 2%, 3%, 4 %, 5 % et 10 % de préférence entre 0,1% et 5% en poids d'un extrait de légumineuse par rapport au poids total de la composition.

Dans un mode de réalisation particulier, la composition amendante utilisée dans le cadre de la présente invention comprend :
- un amendement basique calcique,
- au moins 0,1% en poids d'un extrait de feuilles de *Cynara* par rapport au poids total de la composition, par exemple au moins 2%, 3%, 4%, 5% en poids/poids, par exemple entre 0,1% et 5% en poids d'un extrait de feuilles de *Cynara* par rapport au poids total de la composition,
- au moins 0,1 % en poids d'un extrait de levure par rapport au poids total de la composition, par exemple au moins 1%, 2%, 3%, 4%, 5% et 10% de préférence entre 0,1 % et 5 % en poids d'un extrait de levure par rapport au poids total de la composition, et
- au moins 0,1% en poids d'un extrait de légumineuse par rapport au poids total de la composition, par exemple au moins 1%, 2%, 3%, 4%, 5% et 10% de préférence entre 0,1% et 5% en poids d'un extrait de légumineuse par rapport au poids total de la composition.

Par exemple, la composition amendante utilisée dans le cadre de la présente invention peut comprendre un amendement basique calcique, 0,7% en poids d'un extrait de feuilles de *Cynara* par rapport au poids total de la composition, 0,2% en poids d'un extrait de levure par rapport au poids total de la composition et 0,5% en poids d'un extrait de légumineuse par rapport au poids total de la composition.

Lorsque la composition amendante comprend un amendement basique calcique, ladite composition est de préférence apportée au sol sous forme solide en une quantité allant de 100 kg/ha à 2000 kg/ha (kilogrammes/hectares), de préférence allant de 200 kg/ha à 1200 kg/ha, de préférence allant de 400 kg/ha à 800 kg/ha, de préférence environ 600 kg/ha. La composition est avantageusement répandue de façon homogène sur un champ ou avant la culture de plantes.

Dans un mode de réalisation particulier, l'extrait de feuilles de *Cynara* est apporté au sol en une quantité allant de 1 kg/ha à 50 kg/ha (kilogrammes/hectares), de préférence allant de 2 kg/ha à 10 kg/ha, de préférence allant de 4 à 5 kg/ha.

Dans un mode de réalisation particulier, l'extrait de levure est apporté au sol en une quantité allant de 0,5 kg/ha à 50 kg/ha (kilogrammes/hectares), de préférence allant de 1 kg/ha à 10 kg/ha, de préférence allant de 1 à 5 kg/ha.

Dans un mode de réalisation particulier, l'extrait de légumineuse de la famille des fabacées est apporté au sol en une quantité allant de 1 kg/ha à 50 kg/ha (kilogrammes/hectares), de préférence allant de 2 kg/ha à 10 kg/ha, de préférence allant de 3 à 5 kg/ha.

Dans un mode de réalisation particulier, un extrait de feuilles de *Cynara* contenant une quantité de cynarine tel que définie ci-dessus et/ou contenant une quantité de polyphénols dérivés de l'acide chlorogénique tel que définie ci-dessus est apporté au sol en une quantité allant de 1 kg/ha à 50 kg/ha (kilogrammes/hectares), de préférence allant de 2 kg/ha à 10 kg/ha, de préférence allant de 4 à 5 kg/ha.

Bien que le sol traité avec la composition amendante puisse être un sol acide, neutre ou calcaire, le sol traité est de préférence un sol acide. Lorsque le sol est acide, la composition amendante utilisée dans le cadre de la présente invention comprend avantageusement un amendement basique calcique qui permet de corriger le pH du sol. Il est en effet connu que l'assimilation des éléments nutritifs par la plante est facilitée dans un sol à pH neutre.

La demanderesse a en effet mis en évidence qu'un extrait de feuilles de *Cynara* permet de stimuler la nitrification du sol. Ainsi, la composition amendante comprenant un extrait de feuilles de *Cynara* utilisée dans le cadre de la présente invention permet de stimuler la nitrification du sol. La nitrification du sol permet d'augmenter la quantité de nutriments disponibles dans le sol et donc d'apporter des nutriments à la plante, répondant ainsi aux besoins de croissance de la culture qui s'exprimera notamment en termes d'amélioration de rendement et/ou de la qualité de la récolte.

La composition amendante est apportée au sol dans une quantité suffisante pour augmenter la nitrification du sol. La nitrification du sol peut être mesurée de différentes manières, par exemple en mesurant l'augmentation de la teneur en nitrate du sol. L'augmentation s'entend par rapport à un sol n'ayant pas reçu la composition. La mesure de la teneur en nitrate est réalisée par une méthode d'analyse appropriée.

Avantageusement, la composition est apportée au sol dans une quantité suffisante pour augmenter la teneur en nitrate du sol d'au moins 10%, au moins 15%, avantageusement au moins 20%.

La présente invention trouve application dans le traitement d'une très grande variété de plantes. Parmi celles-ci, on citera en particulier :
- les plantes de grande culture telles que les céréales (blé, maïs),
- les protéagineux (pois),
- les oléagineux (soja, tournesol),
- les plantes prairiales utiles pour l'alimentation animale,
- les cultures spécialisées telles qu'en particulier le maraîchage (laitue, épinards, tomate, melon), la vigne, l'arboriculture (poire, pomme, nectarine), ou l'horticulture (rosiers).

La présente description, pas selon l'invention, décrit également une composition amendante comprenant un extrait de feuilles de *Cynara* et un ou plusieurs composé(s) choisi(s) parmi :
- un amendement basique calcique, de préférence un amendement basique calcique telle que décrite ci-dessus
- un extrait de levures, de préférence un extrait de levure tel que décrit ci-dessus, et
- un extrait de légumineuse de la famille des fabacées, de préférence un extrait de légumineuse de la famille des fabacées tel que décrit ci-dessus.

Avantageusement, la composition amendante est sous forme liquide ou sous forme solide. Lorsque la composition amendante est sous forme solide, elle comprend de préférence un amendement basique calcique.

La composition amendante peut comprendre un amendement basique calcique. Ainsi, la composition amendante comprend avantageusement au moins 0,1% en poids d'un extrait de feuilles de *Cynara* par rapport au poids total de la composition, par exemple au moins 1%, 2%, 3%, 4%, 5%, par exemple entre 0,1% et 5% en poids d'un extrait de feuilles de *Cynara* par rapport au poids total de la composition. Dans ce mode de réalisation, la composition amendante peut également comprendre :
- au moins 0,1% en poids d'un extrait de levure par rapport au poids total de la composition, par exemple au moins 1%, 2%, 3%, 4 %, 5 % et 10 % de préférence entre 0,1% et 5% d'un extrait de levure par rapport au poids total de la composition, et/ou
- au moins 0,1% en poids d'un extrait de légumineuse par rapport au poids total de la composition, par exemple au moins 1%, 2%, 3%, 4 %, 5 % et 10 % de préférence entre 0,1% et 5% en poids d'un extrait de légumineuse par rapport au poids total de la composition.

En particulier, la composition amendante comprend :
- un amendement basique calcique,
- au moins 0,1% en poids d'un extrait de feuilles de *Cynara* par rapport au poids total de la composition, par exemple au moins 2%, 3%, 4%, 5% en poids/poids, par exemple entre 0,1% et 5% en poids d'un extrait de feuilles de *Cynara* par rapport au poids total de la composition,
- au moins 0,1 % en poids d'un extrait de levure par rapport au poids total de la composition, par exemple au moins 1%, 2%, 3%, 4%, 5% et 10% de préférence entre 0,1 % et 5 % en poids d'un extrait de levure par rapport au poids total de la composition, et
- au moins 0,1% en poids d'un extrait de légumineuse par rapport au poids total de la composition, par exemple au moins 1%, 2%, 3%, 4%, 5% et 10% de préférence entre 0,1% et 5% en poids d'un extrait de légumineuse par rapport au poids total de la composition.

Par exemple, la composition amendante peut comprendre un amendement basique calcique, 0,7% en poids d'un extrait de feuilles de *Cynara* par rapport au poids total de la composition, 0,2% en poids d'un extrait de levure par rapport au poids total de la composition et 0,5% en poids d'un extrait de légumineuse par rapport au poids total de la composition.

La composition amendante peut comprendre en outre une ou de plusieurs substance(s) fertilisante(s) choisie(s) parmi l'urée, le sulfate d'ammonium, le nitrate d'ammonium, le phosphate, le chlorure de potassium, du sulfate d'ammonium, le nitrate de magnésium, le nitrate de manganèse, le nitrate de zinc, le nitrate de cuivre, l'acide phosphorique, le nitrate de potassium et l'acide borique.

La présente invention est illustrée par les exemples non limitatifs suivants.

### Légende des figures

Figure 1 : Profil HPLC montrant les dérivés de l'acide chlorogénique contenus dans un extrait de feuille de *Cynara scolymus* (profil du bas) obtenu sur une colonne phase inverse Ib-Sil ODS (250 mm x 4.6 mm x 5 µm) (Phenomenex USA) à température ambiante (18-25 °C).

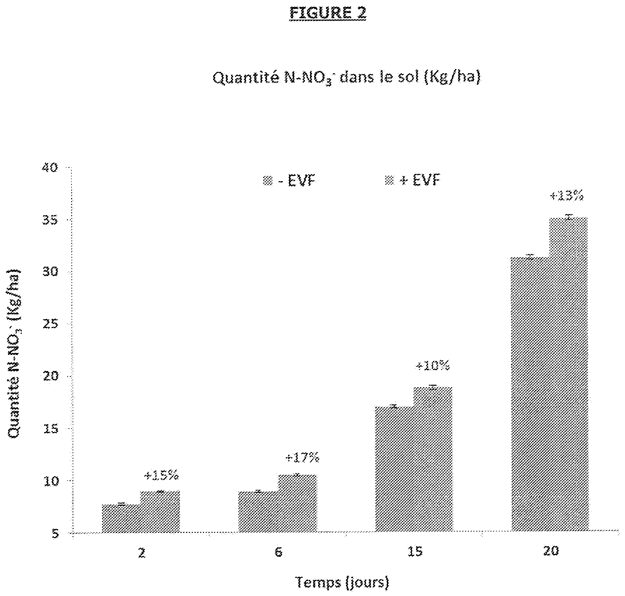

Figure 2 : graphique qui représente la quantité d'azote nitrique dans un sol, (i) traité avec une composition comprenant un extrait de feuilles de *cynara scolymus* (EVF), *i.e.* barre « +EVF » et (ii) non traité, *i.e.* barre « -EVF ». Le graphique montre une augmentation de 15% (après 2 jours d'incubation), 17% (après 6 jours d'incubation), 10% (après 15 jours d'incubation) et 13% (après 20 jours d'incubation) de la quantité de nitrate dans le sol traité par rapport au sol non traité.

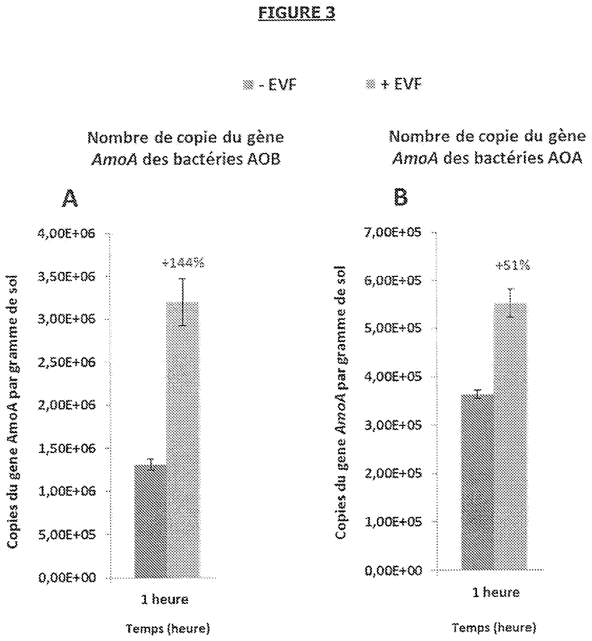

Figure 3 : graphique qui représente le nombre de copie de gènes *AmoA* des bactéries AOB (Ammonia Oxidizing Bacteria ; graphique A) et des bactéries AOA (Ammonia Oxidizing Archaea ; graphique B) dans un sol, (i) traité avec une composition comprenant un extrait de feuilles de *cynara scolymus* (EVF), *i.e.* barre « +EVF » et (ii) non-traité, *i.e.* barre « -EVF ». Le graphique montre une augmentation de 144% (après 1 heure d'incubation) du nombre de copie de gènes *AmoA* des bactéries AOB, et une augmentation de 51% (après 1 heure d'incubation) du nombre de copie de gènes *AmoA* des bactéries AOA dans le sol traité par rapport au sol non-traité.

### Exemples

### Exemple 1 : Préparation d'un extrait de feuilles de Cvnara scolymus (artichaut)

### Matériel utilisé

Le matériel suivant a été utilisé :
- Réacteur double enveloppe en verre 10L KGW
- Colonne de refroidissement en verre Lenz 400mm NS29/32
- Refroidisseur à circulation Huber Unichiller 012W
- Pâle d'agitation en PTFE
- Moteur d'agitation IKA RW20
- Thermostat à immersion Julabo MA
- Büchner
- Pompe à vide par recirculation d'eau Velp Scientifica JPV
- Toile de filtration nylon 200 µm Fischer
- Centrifugeuse Beckman Coulter Avanti J-26 XP
- Godets Beckman Coulter J-Lite PP-1000

### Pour l'extraction

Le réacteur double enveloppe en verre de 10L (KGW) a été équipé d'un thermostat à immersion (Julabo MA) pour ajuster la température du milieu d'extraction. Le réacteur a été surmonté d'une colonne en verre (Lenz 400mm NS29/32) reliée à un refroidisseur à circulation (Huber Unichiller 012W). L'agitation du milieu d'extraction a été assurée par une pâle en PTFE alimentée par un moteur d'agitation (IKA RW20).

### Pour la filtration

La filtration de l'extrait a été réalisée sur Bücher à l'aide d'une pompe à vide par recirculation d'eau (Velp Scientifica JPV). Le filtre utilisé a été découpé aux dimensions du Büchner dans une toile de filtration en nylon 200 µm (Fischer).

### Pour la centrifugation

Une centrifugeuse Avanti J-26 XP et des godets J-Lite PP-1000 (Beckman Coulter) ont été utilisés.

### Protocoles

### Préparation d'un extrait de Cynara scolymus (Extrait A)

4000 g d'eau ont été introduits dans un bécher en verre de 10L. L'eau a été chauffée jusqu'à 40°C sous faible agitation. 1000 g de poudre de feuilles d'artichaut titré en cynarine (Tortay langeais 37130 - France) ont été ajoutés à l'eau sous agitation. Lorsque la poudre de feuilles d'artichaut a été dispersée dans l'eau, le pH était de l'ordre de 5-6. Le pH a été ajusté à 7 avec une solution d'hydroxyde de sodium à 30% w/w (Quaron). Le mélange ainsi obtenu a été maintenu sous agitation pendant 3h à 40°C sur une plaque chauffante type agitateur magnétique chauffant VWR VMS-A IP21.

Le mélange a été filtré sur Büchner sur un nylon de 200 µm en appliquant un vide partiel avec une pompe de type Waston Marlow. La fraction liquide a été récupérée (filtrat) et a été centrifugée à 7000 rpm, à 15 °C pendant 20 min dans une centrifugeuse Bechman Coulter. L'extrait obtenu (Extrait A) après filtration a été conservé à -80 °C dans un congélateur de laboratoire vertical ultra-basse température Liebherr Scientific, jusqu'à utilisation.

### Mesure de la quantité de cynarine dans un extrait de Cynara (titrage en cynarine) par HPLC-UV : exemple de l'extrait A

L'extrait A (70 µl) a été mélangé à 30 µl de Tris/HCL (pH 8.75; 2M) et 20mg d'alumine, et le tout a été agité pendant 5 min avec un barreau aimanté et centrifugé (10000 g, 5 min) dans une centrifugeuse Beckman Coulter. Le précipitât qui contient la cynarine insoluble a été lavé une fois avec de l'eau ultrapure Milliq (1 ml).

La cynarine, soluble en milieu acide, a été resolubilisée avec de l'acide phosphorique 70 µl (0.4 M) puis le mélange a été centrifugée (10000 g, 5 min) avec une centrifugeuse Beckman Coulter. La cynarine restant dans le surnageant.

Des aliquotes de 20 µl du surnageant ont été injectés dans un appareil chromatographique de type Varian 9012 comprenant une valve d'injection de 20 µl (Rheodyne USA) et un détecteur ultraviolet Varian 9050 et réglé sur 316 nm. Une colonne phase inverse Ib-Sil ODS (250 mm x 4.6 mm x 5 µm) (Phenomenex USA) a été utilisée. Le protocole chromatographique a été réalisé à température ambiante (18-25 °C).

La colonne a été éluée avec un mélange eau /méthanol/acide acétique (78.5:20:2.5, v/v/v). La phase mobile a été injectée à un débit de 1.3 ml/min. Les résultats obtenus ont été comparés à une droite de calibration obtenue avec des solutions standards de cynarine. Les solutions standards de cynarine ont été obtenues à partir d'une solution mère de 0.1 mg/ml de cynarine préparée dans un mélange méthanol: eau (1:1, v/v). Les solutions standards de cynarine qui ont permis d'obtenir la droite de calibration ont été obtenues par dilution de la solution mère dans le même mélange méthanol: eau (1:1, v/v).

### Caractérisation de l'extrait A par HPLC-UV

L'extrait A comprenait principalement de la cynarine et d'autres polyphénols dérivés de l'acide chlorogénique dont les proportions étaient les suivantes :
- Cynarine : 41.7 mg/100g d'extrait sec
- Autres polyphénols dérivés de l'acide chlorogénique : 2291.3 mg/100g d'extrait sec
- Total des polyphénols dérivés de l'acide chlorogénique : 2333.0 mg/100g d'extrait sec

### Exemple 2 : Mesure de la stimulation de la nitrification d'un sol par la mesure de l'augmentation de la teneur en nitrate du sol

### Préparation du sol

10 g de sol sec (Tableau 1) tamisé avec un tamis dont le diamètre des mailles est de 2 mm, ont été placés dans des flacons en verre de 60 ml auxquels sont ajoutés 1 ml d'eau, ce volume permettant d'atteindre 70% de la capacité au champ du sol étudié. Après 1h d'incubation, les traitements ont été appliqués.

**Tableau 1 : principales caractéristique du sol**

| Texture | Argile limoneuse |
|---|---|
| pH | 8,2 |
| Matière organique (% massique) | 5 |
| Capacité d'échange cationique (meq/100g) | 19,2 |

### Sol traité avec un extrait de feuilles Cynara scolymus (+EVF)

10 g de sol sec tamisé avec un tamis dont le diamètre des mailles est de 2 mm, ont été placés dans des flacons en verre de 60 ml auxquels ont été ajoutés 1 ml d'eau, ce volume permettant d'atteindre 70% de la capacité au champ du sol étudié. Après 1h d'incubation, 30 kg/ha d'azote sous forme d'ammonium sulfate a été ajouté. L'extrait de feuille *Cynara scolymus* (EVF) a été appliqué à une dose correspondant à un traitement de 1 kg/ha. Les flacons ont été ensuite hermétiquement fermés, puis mis à incuber à la température de 10°C pendant une période allant jusqu'à 20 jours. Au cours de cette période, les cinétiques de nitrification associées à l'apparition du nitrate dans le sol ont été établies en effectuant des dosages de nitrate à 2, 6, 15 et 20 jours.

### Sol non traité (-EVF)

10 g de sol sec tamisé avec un tamis dont le diamètre des mailles est de 2 mm, ont été placés dans des flacons en verre de 60 ml auxquels ont été ajoutés 1 ml d'eau, ce volume permettant d'atteindre 70% de la capacité au champ du sol étudié. Après 1h d'incubation, 30 kg/ha d'azote sous forme d'ammonium sulfate a été ajouté. Les flacons ont été ensuite hermétiquement fermés, puis mis à incuber à la température de 10°C pendant une période allant jusqu'à 20 jours. Au cours de cette période, les cinétiques de nitrification associées à l'apparition du nitrate dans le sol ont été établies en effectuant des dosages de nitrate à 2, 6, 15 et 20 jours.

### Extraction des nitrates du sol

L'extraction a été faite en ajoutant 30 mL d'eau pure dans le flacon contenant les 10 g de terre, puis en agitant à l'aide d'un agitateur rotatif pendant une heure. Les fioles ont été laissées à décanter pendant 10 min. Le surnageant a été récupéré et centrifugé à 11000 rpm (rotation par minute) pendant 5 min à 4°C puis filtré grâce à un filtre de 0,25 µm afin d'éliminer toutes particules.

### Dosage des nitrates du sol

La teneur en nitrate a été déterminée par chromatographie ionique à haute performance (HPIC, ICS 5000+). 25µl d'extrait filtré a été injecté grâce à un passeur automatique. Les échantillons ont été élués grâce à une solution composée d'acide méthane sulfonique (MSA ; 20mM) délivrée par un système de pompe isocratique. Les cations de l'échantillon ont été détectés, après séparation, grâce à un détecteur conductimétrique. Le nitrate a été quantifié grâce à une calibration du système avec des solutions standards.

Pour chacune des conditions d'incubation (+EVF et -EVF), quatre lots de sol ont été constitués (1 lot = 1 répétition biologique).

L'ensemble des traitements ont été réalisés systématiquement pour chacune des répétitions biologiques, c'est-à-dire en quadruplât. Les données obtenues ont été présentées sous forme de moyenne et la variabilité des résultats a été donnée sous la forme de l'erreur standard de la moyenne pour n=4. Une analyse statistique des résultats a été réalisée en utilisant le test de Student.

Le dosage de la teneur en nitrate est présenté dans la Figure 2.

Conclusion : les sols traités avec l'extrait de feuilles de *Cynara scolymus* (+EVF) ont présenté une augmentation significative de la teneur en nitrate du sol : +15% (après 2 jours d'incubation), +17% (après 6 jours d'incubation), +10% (après 15 jours d'incubation) et +13% (après 20 jours d'incubation).

### Exemple 3 : Mesure de la stimulation de la nitrification d'un sol par la mesure de la diminution du pH du sol

### Préparation du sol

80 g de sol sec (Tableau 1) tamisé avec un tamis dont le diamètre des mailles est de 2 mm, ont été placés dans des cuves en plexiglas de 90 cm³ (5,4*4*4,2 cm), une optode a été collée sur une des faces transparentes des cuves en plexiglas auxquels ont été ajoutés 15 ml d'eau, ce volume permettant d'atteindre 70% de la capacité au champ du sol étudié. Après 24 h d'incubation, les traitements ont été appliqués.

### Sol traité avec un extrait de feuille de Cynara scolymus (+EVF)

80 g de sol sec (Tableau 1) tamisé avec un tamis dont le diamètre des mailles est de 2 mm, ont été placés dans des cuves en plexiglas de 90 cm³ (5,4*4*4,2 cm), une optode a été collée sur une des faces transparentes des cuves en plexiglas auxquels ont été ajoutés 15 ml d'eau, ce volume permettant d'atteindre 70% de la capacité au champ du sol étudié. Après 24 h d'incubation, les traitements ont été appliqués.

80 kg/ha d'azote sous forme d'ammonium sulfate a été ensuite ajouté. L'extrait de feuille de *Cynara scolymus* (+EVF) a été appliqué à une dose correspondant à un traitement de 1 kg/ha. Les cuves ont été ensuite placées à l'obscurité pendant 13 jours. Des photographies de l'optode ont été prises après 4, 5, 6, 7, 8, 9, 10, 11, 12 et 13 jours au moyen d'une caméra reliée à un ordinateur. Chaque photo a ensuite été analysée par le logiciel d'imagerie (VisiSens) afin de déterminer l'évolution du pH (en mesurant l'évolution de la fluorescence) pendant cette durée.

### Sol non-traité avec un extrait de feuille de Cynara scolymus (+EVF)

80 g de sol sec (Tableau 1) tamisé avec un tamis dont le diamètre des mailles est de 2 mm, ont été placés dans des cuves en plexiglas de 90 cm³ (5,4*4*4,2 cm), une optode a été collée sur une des faces transparentes des cuves en plexiglas auxquels ont été ajoutés 15 ml d'eau, ce volume permettant d'atteindre 70% de la capacité au champ du sol étudié. Après 24 h d'incubation, les traitements ont été appliqués.

80 kg/ha d'azote sous forme d'ammonium sulfate a été ensuite ajouté. Les cuves ont été ensuite placées à l'obscurité pendant 13 jours. Des photographies de l'optode ont été prises après 4, 5, 6, 7, 8, 9, 10, 11, 12 et 13 jours au moyen d'une caméra reliée à un ordinateur. Chaque photo a ensuite été analysée par le logiciel d'imagerie (VisiSens) afin de déterminer l'évolution de la fluorescence pendant cette durée.

L'évolution du pH du sol a été visualisée par le logiciel VisiSens (données photographiques non présentées).

Conclusion : les sols traités avec l'extrait de feuilles de *Cynara scolymus* (+EVF) ont présenté une diminution du pH du sol entre 4 et 13 jours d'incubation, indiquant une acidification du sol liée à la stimulation de la nitrification du sol.

### Exemple 3 : Mesure de la stimulation de la nitrification d'un sol par la mesure de l'augmentation dans le sol du nombre de copies du gène AmoA (gène impliqué dans la synthèse de l'enzyme ammonia monooxygenase responsable de la transformation de l'ammonium en nitrate)

### Préparation du sol

10 g de sol sec (Tableau 2) tamisé avec un tamis dont le diamètre des mailles est de 2 mm, ont été placés dans des flacons en verre de 60 ml auxquels ont été ajoutés 1 ml d'eau, ce volume permettant d'atteindre 70% de la capacité au champ du sol étudié. Après 1h d'incubation, les traitements sont appliqués.

**Tableau 2 : principales caractéristique du sol**

| Texture | Limoneuse |
|---|---|
| pH | 6,2 |
| Matière organique (%) | 3,6 |
| Capacité d'échange cationique (meq/100g) | 8,2 |

### Sol traité avec un extrait de feuilles de Cynara scolymus (+EVF)

10 g de sol sec (Tableau 2) tamisé avec un tamis dont le diamètre des mailles est de 2 mm, ont été placés dans des flacons en verre de 60 ml auxquels ont été ajoutés 1 ml d'eau, ce volume permettant d'atteindre 70% de la capacité au champ du sol étudié. Après 1h d'incubation, l'extrait de feuille de *Cynara scolymus* (+EVF) a été appliqué à la dose de 1 kg/ha. Les flacons ont été ensuite hermétiquement fermés, puis mis à incuber à température ambiante pendant une période d'une heure. Après cette période, le nombre de copies du gène *AmoA* a été mesuré par PCR quantitative.

### Sol non-traité avec un extrait de feuilles de Cynara scolymus (-EVF)

10 g de sol sec (Tableau 2) tamisé avec un tamis dont le diamètre des mailles est de 2 mm, ont été placés dans des flacons en verre de 60 ml auxquels ont été ajoutés 1 ml d'eau, ce volume permettant d'atteindre 70% de la capacité au champ du sol étudié. Après 1h d'incubation, les flacons ont été ensuite hermétiquement fermés, puis mis à incuber à température ambiante pendant une période d'une heure. Après cette période, le nombre de copies du gène *AmoA* a été mesuré par PCR quantitative.

### Extraction des ADNs à partir d'échantillons de sol

L'ADN a été extrait à partir des échantillons de sol en utilisant le kit d'extraction de sol Nucleospin (Macherey Nagel) et en suivant les instructions du fabricant. Pour tous les échantillons, l'ADN a été élué dans 50 µl de tampon d'élution.

### Analyse de la qualité des ADNs

Après extraction et élution de l'ADN, la qualité et la concentration de l'ADN a été analysé grâce au système automatisé « 4200 TapeStation System » de chez Agilent Technologies et en utilisant le logiciel « genomic DNA screentapes ».

### Analyse du nombre de copie du gène AmoA par qPCR

Le nombre de copies du gène *AmoA* a été mesuré par qPCR en utilisant des amorces spécifiques de ce gène. Pour AOA-amoA F (SAATGGTCTGGCTTAGACG), AOA-amoA R (GCG-GCCATCCATCTGTATGT) et pour AOB-amoA F (GGGGTTTCTACTGGTGGT), AOB-amoA R (CCCCTTCGGGAAAGCCTTCTTC). Les ADNs standards ont été créés par amplification par PCR d'extraits d'ADN du sol. Les amplicons obtenus ont été purifiés avant la quantification dans le système « TapeStation ». Le nombre de copies des gènes cibles a été calculé par la formule suivante : Nombre de copies = 6,023 x 1023 (copies/mol) x la concentration du standard (g/ml)/masse moléculaire (g/mol).

Les courbes standards pour le gène *AmoA* des bactéries AOB et AOA ont été réalisées en utilisant une série de dilutions d'ADN allant de 101 à 106 copies du gène cible. Le standard, les échantillons d'ADN et le control ont été amplifiés en trois répétitions avec les paires d'amorces respectives. Toutes les réactions ont été réalisées avec le système PCR en temps réel CFX384 de chez Biorad, avec une dénaturation initiale à 98°C pendant 3 min, suivie de 40 cycles de 98°C pendant 15s, 65°C pendant 30 secondes et 72°C pendant 50s et extension finale à 72°C pendant 5 min. Chaque réaction de 10 µl contenait 1 µl d'ADN et une concentration de 300 nM de chaque amorce. Les échantillons ont été quantifiés par rapport à la courbe standard correspondant en utilisant la version du logiciel CFX Manager 3.1 (BIORAD). Le calcul final du nombre de copies du gène a été calculé et rapportées par gramme de sol.

Pour chacune des conditions d'incubation (+EVF et -EVF), quatre lots de sol ont été constitués (1 lot = 1 répétition biologique).

L'ensemble des traitements ont été réalisés systématiquement pour chacune des répétitions biologiques, c'est-à-dire en quadruplât. Les données obtenues ont été présentées sous forme de moyenne et la variabilité des résultats a été donnée sous la forme de l'erreur standard de la moyenne pour n=4. Une analyse statistique des résultats a été réalisée en utilisant le test de Student.

Le nombre de copie du gène *AmoA* des bactéries AOB et AOA est présenté dans la Figure 3.

Conclusion : les sols traités avec l'extrait de feuilles de *Cynara scolymus* (+EVF) présentent une augmentation significative du nombre de copie du gène *AmoA* des bactéries AOB (+144%) et des bactéries AOA (+51%) après 1 heure d'incubation.

## Revendications

1. Utilisation d'une composition amendante comprenant un extrait de feuilles de *Cynara* pour stimuler la nitrification d'un sol.

2. Utilisation selon la revendication 1, dans laquelle la composition comprend en outre un ou plusieurs composé(s) choisi(s) parmi :
- un amendement basique calcique,
- un extrait de levures,
- un extrait de légumineuse de la famille des fabacées, et
- éventuellement une ou plusieurs substance(s) fertilisante(s) choisie(s) parmi l'urée, le sulfate d'ammonium, le nitrate d'ammonium, le phosphate, le chlorure de potassium, du sulfate d'ammonium, le nitrate de magnésium, le nitrate de manganèse, le nitrate de zinc, le nitrate de cuivre, l'acide phosphorique, le nitrate de potassium et l'acide borique.

3. Utilisation selon l'une quelconque des revendications 1 à 2, dans laquelle *Cynara* est *Cynara scolymus.*

4. Utilisation selon l'une quelconque des revendications 2 à 3, dans laquelle l'extrait de levures est un hydrolysat de levures, de préférence un hydrolysat de levures de référence CAS No 8013-01-2.

5. Utilisation selon l'une quelconque des revendications 2 à 4, dans laquelle l'extrait de légumineuse de la famille des fabacées est un extrait de soja, de préférence un perméat de soja.

6. Utilisation selon l'une quelconque des revendications 1 à 5, dans laquelle le sol est un sol acide.

7. Utilisation selon l'une quelconque des revendications 1 à 6, dans laquelle l'extrait de feuilles de Cynara est apporté au sol en une quantité allant de 1 kg/ha à 50 kg/ha (kilogrammes/hectares), de préférence allant de 2 kg/ha à 10 kg/ha, de préférence allant de 4 à 5 kg/ha.

8. Procédé pour stimuler la nitrification d'un sol, **caractérisé en ce qu'**il comprend l'apport audit sol d'une composition amendante comprenant un extrait de feuilles de *Cynara.*

9. Procédé selon la revendication 8, dans lequel la composition comprend en outre un ou plusieurs composé(s) choisi(s) parmi :
- un amendement basique calcique,
- un extrait de levures,
- un extrait de légumineuse de la famille des fabacées et,
- éventuellement une ou de plusieurs substance(s) fertilisante(s) choisie(s) parmi l'urée, le sulfate d'ammonium, le nitrate d'ammonium, le phosphate, le chlorure de potassium, du sulfate d'ammonium, le nitrate de magnésium, le nitrate de manganèse, le nitrate de zinc, le nitrate de cuivre, l'acide phosphorique, le nitrate de potassium et l'acide borique.

10. Procédé selon l'une quelconque des revendications 8 à 9, dans lequel *Cynara* est *Cynara scolymus.*

11. Procédé selon l'une quelconque des revendications 9 à 10, dans lequel l'extrait de levure est un hydrolysat de levures, de préférence de référence CAS No 8013-01-2.

12. Procédé selon l'une quelconque des revendications 9 à 11, dans lequel l'extrait de légumineuse de la famille des fabacées est un extrait de soja, de préférence un perméat de soja.

13. Procédé selon l'une quelconque des revendications 8 à 12, dans lequel le sol est un sol acide.

14. Procédé selon l'une quelconque des revendications 8 à 13, dans lequel l'extrait de feuilles de Cynara est apporté au sol en une quantité allant de 1 kg/ha à 50 kg/ha (kilogrammes/hectares), de préférence allant de 2 kg/ha à 10 kg/ha, de préférence allant de 4 à 5 kg/ha.

## Patentansprüche

1. Verwendung einer verbessernden Zusammensetzung, die einen Extrakt aus *Cynara*-Blättern umfasst, um die Nitrifikation eines Bodens zu stimulieren.

2. Verwendung nach Anspruch 1, wobei die Zusammensetzung ferner eine oder mehrere Verbindung(en) umfasst, die ausgewählt ist (sind) aus:
- einem basischen kalkhaltigen Verbesserer,
- einem Hefeextrakt,
- einem Extrakt aus Hülsenfrüchten aus der Familie der Fabaceae, und
- gegebenenfalls einer oder mehreren Düngemittel-Substanz(en), die aus Harnstoff, Ammoniumsulfat, Ammoniumnitrat, Phosphat, Kaliumchlorid, Ammoniumsulfat, Magnesiumnitrat, Mangannitrat, Zinknitrat, Kupfernitrat, Phosphorsäure, Kaliumnitrat und Borsäure ausgewählt sind.

3. Verwendung nach einem der Ansprüche 1 bis 2, wobei *Cynara Cynara scolymus* ist.

4. Verwendung nach einem der Ansprüche 2 bis 3, wobei der Hefeextrakt ein Hefehydrolysat, vorzugsweise ein Referenzhefehydrolysat mit der CAS-Nr. 8013-01-2, ist.

5. Verwendung nach einem der Ansprüche 2 bis 4, wobei der Extrakt aus Hülsenfrüchten aus der Familie der Fabaceae ein Sojaextrakt, vorzugsweise ein Sojapermeat, ist.

6. Verwendung nach einem der Ansprüche 1 bis 5, wobei der Boden ein saurer Boden ist.

7. Verwendung nach einem der Ansprüche 1 bis 6, wobei der Extrakt aus Cynara-Blättern dem Boden in einer Menge von 1 kg/ha bis 50 kg/ha (Kilogramm/Hektar), vorzugsweise von 2 kg/ha bis 10 kg/ha, vorzugsweise von 4 bis 5 kg/ha, zugeführt wird.

8. Verfahren zur Stimulierung der Nitrifikation eines Bodens, **dadurch gekennzeichnet, dass** es die Zugabe einer verbessernden Zusammensetzung umfasst, die einen Extrakt aus *Cynara-Blättern* umfasst.

9. Verfahren nach Anspruch 8, wobei die Zusammensetzung ferner eine oder mehrere Verbindung(en) umfasst, die ausgewählt ist (sind) aus:
- einem basischen kalkhaltigen Verbesserer,
- einem Hefeextrakt,
- einem Extrakt aus Hülsenfrüchten aus der Familie der Fabaceae, und
- gegebenenfalls einer oder mehreren Düngemittel-Substanz(en), die aus Harnstoff, Ammoniumsulfat, Ammoniumnitrat, Phosphat, Kaliumchlorid, Ammoniumsulfat, Magnesiumnitrat, Mangannitrat, Zinknitrat, Kupfernitrat, Phosphorsäure, Kaliumnitrat und Borsäure ausgewählt sind.

10. Verfahren nach einem der Ansprüche 8 bis 9, wobei *Cynara Cynara scolymus* ist.

11. Verfahren nach einem der Ansprüche 9 bis 10, wobei der Hefeextrakt ein Hefehydrolysat, vorzugsweise ein Referenzhefehydrolysat mit der CAS-Nr. 8013-01-2, ist.

12. Verfahren nach einem der Ansprüche 9 bis 11, wobei der Extrakt aus Hülsenfrüchten aus der Familie der Fabaceae ein Sojaextrakt, vorzugsweise ein Sojapermeat, ist.

13. Verfahren nach einem der Ansprüche 8 bis 12, wobei der Boden ein saurer Boden ist.

14. Verfahren nach einem der Ansprüche 8 bis 13, wobei der Extrakt aus Cynara-Blättern dem Boden in einer Menge von 1 kg/ha bis 50 kg/ha (Kilogramm/Hektar), vorzugsweise von 2 kg/ha bis 10 kg/ha, vorzugsweise von 4 bis 5 kg/ha, zugeführt wird.

## Claims

1. Use of an amendment composition comprising an extract of *Cynara* leaves for stimulating the nitrification of a soil.

2. The use as claimed in claim 1, wherein the composition further comprises one or more compound(s) selected from:
- a basic calcium amendment,
- a yeast extract,
- a legume extract from the family Fabaceae, and
- eventually one or more fertilizer substance(s) selected from urea, ammonium sulfate, ammonium nitrate, phosphate, potassium chloride, ammonium sulfate, magnesium nitrate, manganese nitrate, zinc nitrate, copper nitrate, phosphoric acid, potassium nitrate and boric acid.

3. The use as claimed in any one of claims 1 to 2, wherein *Cynara* is *Cynara scolymus.*

4. The use as claimed in any one of claims 2 to 3, wherein the yeast extract is a yeast hydrolysate, preferably a yeast hydrolysate with CAS No. 8013-01-2.

5. The use as claimed in any one of claims 2 to 4, wherein the extract of a legume of the family Fabaceae is a soybean extract, preferably a soybean permeate.

6. The use as claimed in any one of claims 1 to 5, wherein the soil is acidic soil.

7. The use as claimed in any one of claims 1 to 6, wherein the extract of *Cynara* leaves is applied to the soil in an amount ranging from 1 kg/ha to 50 kg/ha (kilograms/hectare), preferably from 2 kg/ha to 10 kg/ha, preferably from 4 to 5 kg/ha.

8. A process for stimulating the nitrification of a soil, **characterized in that** it comprises supplying to said soil an amendment composition comprising an extract of *Cynara* leaves.

9. The process as claimed in claim 8, wherein the composition further comprises one or more compound(s) selected from:
- a basic calcium amendment,
- a yeast extract,
- a legume extract from the family Fabaceae, and
- eventually one or more fertilizer substance(s) selected from urea, ammonium sulfate, ammonium nitrate, phosphate, potassium chloride, ammonium sulfate, magnesium nitrate, manganese nitrate, zinc nitrate, copper nitrate, phosphoric acid, potassium nitrate and boric acid.

10. The process as claimed in any one of claims 8 to 9, wherein *Cynara* is *Cynara scolymus.*

11. The process as claimed in any one of claims 9 to 10, wherein the yeast extract is a yeast hydrolysate, preferably with CAS No. 8013-01-2.

12. The process as claimed in any one of claims 9 to 11, wherein the extract of a legume of the family Fabaceae is a soybean extract, preferably a soybean permeate.

13. The process as claimed in any one of claims 8 to 12, wherein the soil is an acidic soil.

14. The process as claimed in any one of claims 8 to 13, wherein the extract of *Cynara* leaves is applied to the soil in an amount ranging from 1 kg/ha to 50 kg/ha (kilograms/hectare), preferably from 2 kg/ha to 10 kg/ha, preferably from 4 to 5 kg/ha.
